# EUROPEAN PATENT APPLICATION

(11) **EP 3 355 654 A1**
(43) Date of publication of application: **01.08.2018**
(21) Application number: 17746873.3
(22) Date of filing: 23.01.2017
(51) Int. Cl.: H04W 76/02, H04W 76/04

(54) **METHOD OF RECOVERING UE CONTEXT INFORMATION, DEVICE AND SYSTEM**

(30) Priority: 04.02.2016 CN 201610079521
(71) Applicant: ZTE Corporation, Shenzhen, Guangdong 518057 (CN)
(72) Inventor: LIU, Jing, Shenzhen Guangdong 518057 (CN); GAO, Yin, Shenzhen Guangdong 518057 (CN)
(74) Representative: Vossius & Partner Patentanwälte Rechtsanwälte mbB
(86) International application number: PCT/CN2017/072277
(87) International publication number: WO 2017/133553

(57) **Abstract**

Described are a method, a device and a system for resuming a User Equipment (UE) context. The method includes: receiving, by a Mobility Management Entity (MME), a UE context resume request message sent by a base station; resuming, by the MME, the UE context corresponding to the UE context resume request message; under a condition that a UE context resuming fails, informing, by the MME, the base station of a failure of the UE context resuming. According to the embodiment of the present disclosure, the problem that the base station cannot know the failure of the UE context resuming can be solved, and an effect that the base station can know the failure of the UE context resuming can be achieved.

## Description

### TECHNICAL FIELD

The present disclosure relates to communication technology, and more particularly to a method, a device and a system for resuming a User Equipment (UE) context.

### BACKGROUND

The Narrow Band-Internet of Things (NB-IoT) is a kind of Internet of Things (IoT) communication system mainly to improve indoor coverage. The NB-IoT has many features, such as wide coverage, multiple connections, low rate, low cost, low power consumption and the like.

In order to meet the requirements of large user volume and low throughput, data transmissions in an NB-IoT system can include two modes: a Control Plane Mode and a User Plane Mode. In the Control Plane Mode, uplink and downlink data are transmitted via a Non-Access Stratum Protocol Data Unit (NAS PDU) of a signaling. And after a UE accesses a network, only a Signal Radio Bearer (SRB) instead of a Data Radio Bearer (DRB) is established. In the User Plane Mode, uplink and downlink data are transmitted through a conventional DRB user plane. And after a UE accesses a network, both a SRB and a DRB are to be established.

In a User Plane Mode, in order to save signaling of the air interface and fulfill the aim of fast access of the UE, mechanisms of context suspend and context resume are introduced. Namely, after a UE and a Mobility Management Entity (MME) complete a uplink and downlink data transmission, the mechanism of context suspend can be adopted to suspend an Access Stratum (AS) context of the UE on a base station (e.g., an eNB) and the MME. If data transmission between the UE and the MME is needed subsequently, connection over an air interface (Uu) and S1 interface of the UE would be quickly resumed through a Resume procedure.

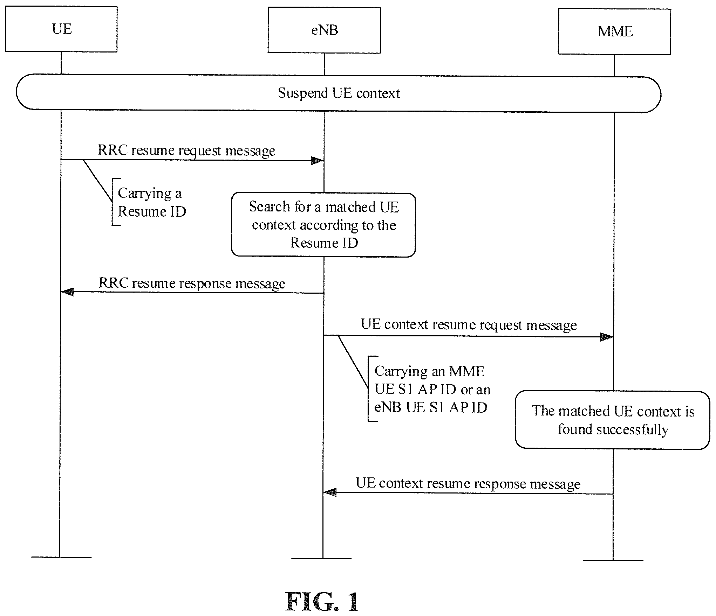

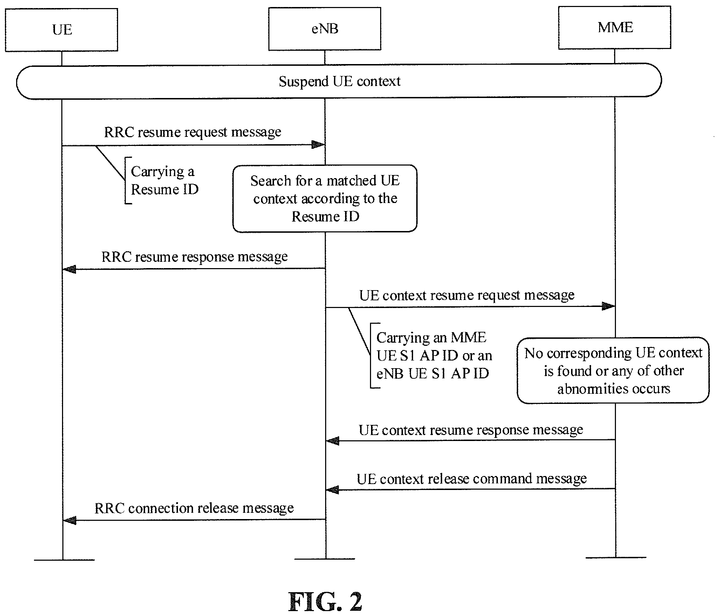

The Resume procedure can comprise an interaction flow of Radio Resource Control Resume (RRC Resume) at air interface and an interaction flow of UE Context Resume at S1 interface. FIG. 1 is a flowchart illustrating a UE context resume success procedure according to related prior arts. As shown in FIG. 1, when receiving a UE context resume request message sent by the eNB, a core network (namely the MME) firstly needs to search for a UE context according to a UE ID carried in the message. If the MME finds the UE context successfully, the Resume procedure completes successfully. If the MME does not find the context of the UE or other abnormities occur, the Resume procedure fails. The abnormal operation at the moment is not perfect in an existing standard. Usually, the MME firstly needs to reply a UE context resume response message to the eNB and then performs a context deletion operation. FIG. 2 is a flowchart illustrating a UE context resume failure procedure according to the related prior arts. As shown in FIG. 2, it can be seen that when receiving the UE context resume response message replied by the MME, the eNB cannot know that the Resume procedure fails at that time, and when receiving a release command from the MME, the eNB cannot know that the release is triggered by the failure of the Resume procedure either.

At present, there is still no effective solution for the problem that the base station cannot know a failure of a UE context resume in the related prior arts.

### SUMMARY

An embodiment of the present disclosure provides a method, a device and a system for resuming a UE (User Equipment) context, so as to at least solve a problem that a base station cannot know a failure in a UE context resume procedure in the prior arts.

According to one aspect of an embodiment of the present disclosure, a method for resuming a UE context is provided, which includes: receiving, by a Mobility Management Entity (MME), a UE context resume request message sent by an base station; resuming, by the MME, the UE context corresponding to the UE context resume request message; informing, by the MME, the base station of the failure of the UE context resume procedure under a condition that the UE context resume procedure fails.

Optionally, the step of informing, by the MME, the base station of the failure of the UE context resume procedure includes: sending, by the MME, a first UE context resume response message to the base station, wherein the first UE context resume response message is used for informing the base station of the failure of the UE context resume procedure; or sending, by the MME, a UE context resume failure message to the base station, wherein the UE context resume failure message is used for informing the base station of the failure the UE context resume procedure; or sending, by the MME, a first message, which does not carry an MME UE S1 AP ID message, to the base station, wherein the first message is used for informing the base station of the failure of the UE context resume procedure; or sending, by the MME, a second UE context resume response message to the base station, wherein the second UE context resume response message is used for indicating a failure of an E-UTRAN-Radio Access Bearer (E-RAB) resume procedure of UE corresponding to the UE context resume request message, and the second UE context resume response message carries one or multiple resume-failed E-RAB IDs and/or resume failure causes corresponding to the resume-failed E-RAB IDs; or sending, by the MME, an error indication message to the base station, wherein the error indication message is used for informing the base station of an error occurring in the UE context resume procedure.

Optionally, the step of sending, by the MME, the first UE context resume response message to the base station includes: sending, by the MME, the first UE context resume response message carrying a UE context release indication to the base station, wherein the UE context release indication is used for indicating the base station to release the UE context.

Optionally, the step of informing, by the MME, the base station of the failure of the UE context resume procedure includes: sending, by the MME, a second message carrying a failure cause of the UE context resume procedure to the base station, wherein the second message is used for informing the base station of the failure of the UE context resume procedure, and the failure cause of the UE context resume procedure is used for indicating a cause of the failure of the UE context resume procedure.

Optionally, the failure cause of the UE context resume procedure comprises one of an unknowable UE context, a UE resource resume failure and an MME processing abnormity.

Optionally, the method further includes: sending, by the MME, a UE context release command message to the base station after informing the base station of the failure of the UE context resume procedure, wherein the UE context release command message is used for indicating the base station to release resources of S1 interface between the base station and the MME.

Optionally, the method further includes: receiving, by the MME, a UE context release request message sent by the base station, before sending the UE context release command message to the base station.

According to another aspect of the embodiment of the present disclosure, a method for resuming a User Equipment (UE) context is provided, which includes: sending, by a base station, a UE context resume request message to a Mobility Management Entity (MME) corresponding to the base station, wherein the UE context resume request message is used for indicating the MME to resume the UE context corresponding to the UE context resume request message; obtaining, by the base station, a notification sent by the MME, wherein the notification is used for indicating a failure of a UE context resume procedure; determining, by the base station, there is a failure in the UE context resume procedure according to the indication of the notification.

Optionally, the step of obtaining, by the base station, the notification which is sent by the MME includes: receiving, by the base station, a first UE context resume response message sent by the MME, wherein the first UE context resume response message is used for informing the base station of the failure of the UE context resume procedure; or receiving, by the base station, a UE context resume failure message sent by the MME, wherein the UE context resume failure message is used for informing the base station of the failure of the UE context resume procedure; or receiving, by the base station, a first message, which does not carry an MME UE S1 AP ID message, sent by the MME, wherein the first message is used for informing the base station of the failure of the UE context resume procedure; or receiving, by the base station, a second UE context resume response message sent by the MME, wherein the second UE context resume response message is used for indicating a failure of an E-UTRAN-Radio Access Bearer (E-RAB) resume procedure of the UE corresponding to the UE context resume request message, and the second UE context resume response message carries one or multiple resume-failed E-RAB IDs and/or resume failure causes corresponding to the resume-failed E-RAB IDs; or receiving, by the base station, an error indication message sent by the MME, wherein the error indication message is used for informing the base station of an error occurring in the UE context resume procedure.

Optionally, the step of receiving, by the base station, the first UE context resume response message sent by the MME includes: receiving, by the base station, the first UE context resume response message sent by the MME, wherein the first UE context resume response message carries a UE context release indication, wherein the UE context release indication is used for indicating the base station to release the UE context.

Optionally, the step of obtaining, by the base station, the notification which is sent by the MME includes: receiving, by the base station, a second message sent by the MME, wherein the second message carries a failure cause of the UE context resume procedure and is used for informing the base station of the failure of the UE context resume procedure, and wherein the failure cause of the UE context resume procedure is used for indicating a cause of the failure of the UE context resume procedure.

Optionally, the failure cause of the UE context resume procedure comprises one of an unknowable UE context, a UE resource resume failure and an MME processing abnormity.

Optionally, the method further includes: informing, by the base station, the UE corresponding to the UE context resume request message to release an air interface or to rebuild the air interface after determining there is a failure in the UE context resume procedure according to the indication of the notification.

Optionally, the method further includes: receiving, by the base station, a UE context release command message sent by the MME, after determining there is a failure of the UE context resume procedure according to the indication of the notification; and releasing, by the base station, resources of S 1 interface between the base station and the MME according to the indication of the UE context release command message.

Optionally, the method further includes: sending, by the base station, a UE context release request message to the MME, before receiving the UE context release command message sent by the MME.

According to another aspect of the embodiment of the present disclosure, a device for resuming a User Equipment (UE) context is further provided, which is used in a Mobility Management Entity (MME) and includes: a first receiving module, configured to receive a UE context resume request message sent by a base station; a resuming module, configured to resume the UE context corresponding to the UE context resume request message; a first informing module, configured to inform the base station of a failure of a UE context resume procedure under a condition that the UE context resume procedure fails.

Optionally, the first informing module is configured to send a first UE context resume response message to the base station, wherein the first UE context resume response message is used for informing the base station of the failure of the UE context resume procedure; or send a UE context resume failure message to the base station, wherein the UE context resume failure message is used for informing the base station of the failure of the UE context resume procedure; or send a first message, which does not carry an MME UE S1 AP ID message, to the base station, wherein the first message is used for informing the base station of the failure of the UE context resume procedure; or send a second UE context resume response message to the base station, wherein the second UE context resume response message is used for indicating a failure of an E-UTRAN-Radio Access Bearer (E-RAB) resume procedure of the UE corresponding to the UE context resume request message, and the second UE context resume response message carries one or multiple resume-failed E-RAB IDs and/or resume failure causes corresponding to the resume-failed E-RAB IDs; or send an error indication message to the base station, wherein the error indication message is used for informing the base station of an error occurring in the UE context resume procedure.

Optionally, the first informing module is configured to send the first UE context resume response message carrying a UE context release indication to the base station, wherein the UE context release indication is used for indicating the base station to release the UE context.

Optionally, the first informing module is configured to send a second message carrying a failure cause of the UE context resume procedure to the base station, wherein the second message is used for informing the base station of the failure of the UE context resume procedure, and the failure cause of the UE context resume procedure is used for indicating a cause of the failure of the UE context resume procedure.

Optionally, the failure cause of the UE context resume procedure includes one of an unknowable UE context, a UE resource resume failure and an MME processing abnormity.

Optionally, the device further includes a first sending module, configured to send a UE context release command message to the base station, wherein the UE context release command message is used for indicating the base station to release resources of S1 interface between the base station and the MME.

Optionally, the device further includes a second receiving module, configured to receive a UE context release request message sent by the base station.

According to another aspect of the embodiment of the present disclosure, a device for resuming a UE context is provided, which is used in a base station and includes: a second sending module, configured to send a UE context resume request message to a Mobility Management Entity (MME) corresponding to the base station, wherein the UE context resume request message is used for indicating the MME to resume the UE context corresponding to the UE context resume request message; an obtaining module, configured to obtain a notification sent by the MME, wherein the notification is used for indicating a failure of a UE context resume procedure; a determining module, configured to determine there is a failure in the UE context resume procedure according to the indication of the notification.

Optionally, the obtaining module is configured to receive a first UE context resume response message sent by the MME, wherein the first UE context resume response message is used for informing the base station of the failure of the UE context resume procedure; or receive a UE context resume failure message sent by the MME, wherein the UE context resume failure message is used for informing the base station of the failure of the UE context resume procedure; or receive a first message which does not carry an MME UE S1 AP ID message from the MME, wherein the first message is used for informing the base station of the failure of the UE context resume procedure; or receive a second UE context resume response message sent by the MME, wherein the second UE context resume response message is used for indicating a failure in an E-UTRAN-Radio Access Bearer (E-RAB) resume procedure of the UE corresponding to the UE context resume request message, and the second UE context resume response message carries one or multiple resume-failed E-RAB IDs and/or resume failure causes corresponding to the resume-failed E-RAB IDs; or receive an error indication message sent by the MME, wherein the error indication message is used for informing the base station of an error occurring in the UE context resume procedure.

Optionally, the obtaining module is configured to receive the first UE context resume response message which is sent by the MME and carries a UE context release indication, wherein the UE context release indication is used for indicating the base station to release the UE context.

Optionally, the obtaining module is configured to receive the first UE context resume response message which is sent by the MME and carries a UE context release indication, wherein the UE context release indication is used for indicating the base station to release the UE context.

Optionally, the obtaining module is configured to receive a second message which is sent by the MME and carries a failure cause of the UE context resume procedure, wherein the second message is used for informing the base station of the failure of the UE context resume procedure, and the failure cause of the UE context resume procedure is used for indicating a cause of the failure of the UE context resume procedure.

Optionally, the failure cause of the UE context resume procedure includes one of an unknowable UE context, a UE resource resume failure and an MME processing abnormity.

Optionally, the device further includes a second informing module, configured to inform the UE corresponding to the UE context resume request message to release an air interface or to rebuild the air interface.

Optionally, the device further includes a third receiving module, configured to receive a UE context release command message sent by the MME; and a releasing module, configured to release resources of S 1 interface between the base station and the MME according to the indication of the UE context release command message.

Optionally, the device further includes a third sending module, configured to send a UE context release request message to the MME.

According to another aspect of the embodiment of the present disclosure, a system for resuming a UE context is provided, which includes: any Mobility Management Entity (MME)-applied device for resuming the UE context and any base station-applied device for resuming the UE context.

In the embodiment of the present disclosure, a computer storage medium is further provided, which can store an execution instructions. The execution instructions are used for executing the method for resuming the UE context in the above-mentioned embodiment.

According to the embodiment of the present disclosure, by adopting the mode that the MME receives the UE context resume request message sent by the base station, resumes the UE context corresponding to the UE context resume request message, and under the condition that the UE context resume procedure fails, informs the base station of a failure of the UE context resume procedure. And when failing in resuming the UE context according to the indication of the base station, the MME can directly inform the base station of the UE context resume failure message, thus the problem that the base station cannot know the failure of the UE context resume procedure can be solved and an effect that the base station can know the failure of the UE context resume procedure can be achieved. In addition, the base station can directly process a Radio Resource Control (RRC) connection resume request of the UE according to the UE context resume failure message, thus the processing time of RRC connection resume procedure can be shortened and the processing efficiency of the RRC connection resume procedure can be improved.

### BRIEF DESCRIPTION OF THE DRAWINGS

Drawings described herein are used to provide further understandings of the present disclosure, which constitute a part of the disclosure, wherein schematic embodiments of the present disclosure and illustrations thereof serve to explain the present disclosure and do not constitute an improper limitation to the present disclosure. In drawings:
FIG. 1 is a flowchart illustrating a UE context resume success procedure according to related arts;
FIG. 2 is a flowchart illustrating a UE context resume failure procedure according to related arts;
FIG. 3 is a flowchart illustrating a method for resuming a UE context according to an embodiment of the present disclosure;
FIG. 4 is a flowchart illustrating a method for resuming a UE context according to another embodiment of the present disclosure;
FIG. 5 is a flowchart illustrating a method for resuming a UE context according to a first embodiment of the present disclosure;
FIG. 6 is a flowchart of a method for resuming a UE context according to a second embodiment of the present disclosure;
FIG. 7 is a flowchart of a method for resuming a UE context according to a third embodiment of the present disclosure;
FIG. 8 is a flowchart of a method for resuming a UE context according to a forth embodiment of the present disclosure;
FIG. 9 is a flowchart of a method for resuming a UE context according to a fifth embodiment of the present disclosure;
FIG. 10 is a schematic diagram illustrating the structure of a device for resuming a UE context according to an embodiment of the present disclosure;
FIG. 11 is a schematic diagram illustrating the structure of a device for resuming a UE context according to another embodiment of the present disclosure;
FIG. 12 is a schematic diagram illustrating the structure of a device for resuming a UE context according to still another embodiment of the present disclosure;
FIG. 13 is a schematic diagram illustrating the structure of a device for resuming a UE context according to yet another embodiment of the present disclosure;
FIG. 14 is a schematic diagram illustrating the structure of a device for resuming a UE context according to yet another embodiment of the present disclosure;
FIG. 15 is a schematic diagram illustrating the structure of a device for resuming a UE context according to yet another embodiment of the present disclosure;
FIG. 16 is a schematic diagram illustrating the structure of a device for resuming a UE context according to yet another embodiment of the present disclosure.

### DETAILED DESCRIPTION

Detailed description will be made to the present disclosure in accompany with drawings and embodiments. It should note that under a condition of no conflict, embodiments of the present disclosure and features in the embodiments can be combined mutually.

It should note that terms such as 'first' and 'second' in the specification, claims and the above-mentioned drawings of the present disclosure serve to distinguish similar objects instead of serving to describe a specific sequence or a precedence order.

### A First Embodiment

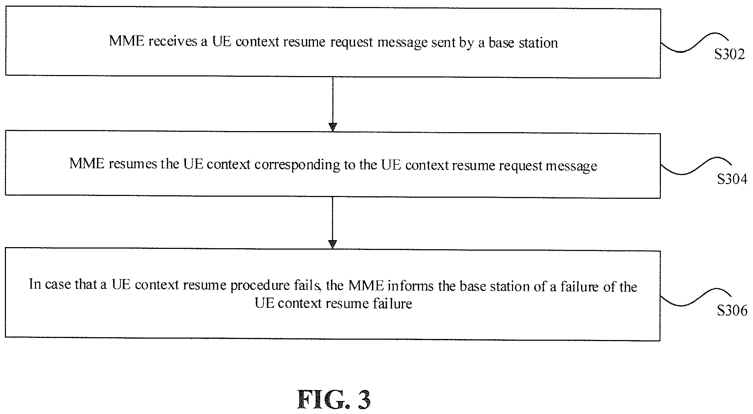

In this embodiment, a method for resuming a UE context is provided. FIG. 3 is a flowchart illustrating a method for resuming a UE context according to an embodiment of the present disclosure. As shown in FIG. 3, the method includes the following steps:
In S302, an MME receives a UE context resume request message sent by a base station;
In S304, the MME resumes the UE context corresponding to the UE context resume request message;
In S306, under a condition that a UE context resume procedure fails, the MME informs the base station of a failure of the UE context resume.

Optionally, the above-mentioned steps can be applied to a scenario of resource resume, more particularly to a scenario of resource resume under a User Plane Mode in a NB-IOT system.

By the above-mentioned steps, when failing in resuming the UE context according to an indication of the base station, the MME can directly inform the base station of the failure of the UE context resume. It can be seen that by adopting the above-mentioned steps, the problem that the base station cannot know the failure of the UE context resume procedure can be solved, and an effect that the base station can know the failure of the UE context resume procedure can be achieved. In addition, the base station can directly process an RRC connection resume request from the UE according to the notification of the failure of the UE context resume procedure, thus the processing time of the RRC connection resume procedure can be shortened and the processing efficiency of the RRC connection resume procedure can be improved.

Optionally, the causes for the failure of the UE context resume procedure can include, but not limited to, the failure for the MME to find the UE context requested by the eNB, or the insufficiency of the resources of the UE, or the abnormity of the processing of the MME, or other abnormal conditions. No limitations are made on the causes for the failure of the UE context resume procedure in the present disclosure. In addition, the failure of the UE context resume procedure can correspond to identical or different causes of failure of the UE context resume procedure, which serve to indicate the causes for the failure of the UE context resume procedure.

For example, the cause corresponding to the situation that the MME does not find the UE context requested by the eNB can be "unknowable UE context"; the cause corresponding to the situation of insufficient resources of UE can be "UE resource resume failure"; and the cause corresponding to the situation of the abnormity of the processing of MME or other abnormal conditions can be "MME processing abnormity".

Alternatively, in the above step S306, the MME can inform the eNB of the failure of the UE context resume procedure in one of, but not limited to, the following five manners.

### Manner 1

The MME sends a first UE context resume response message, configured to inform the eNB of the failure of the UE context resume procedure, to the eNB.

The MME can send the first UE context resume response message carrying a UE context release indication to the eNB, wherein the UE context release indication is used for indicating the eNB to release the UE context.

A description of an example is made as follows according to the manner 1 of UE context resume procedure. In the example, when receiving the UE context resume request message sent by the eNB, and if the MME fails in finding the UE context or any of other abnormities occurs, the MME replies the first UE context resume response message to the eNB and informs the eNB of the failure of the UE context resume procedure by adding an information element into the message. Wherein, the added information element can be a "UE context release indication" which indicates the eNB to release the UE context. After receiving the indication, the eNB determines that the resume procedure fails. The eNB can send a UE context release request message to the MME to release resources of S1 interface, or receive a UE context release message later sent by the MME to release the resources of S 1 interface. In addition, the eNB can trigger an air interface release procedure or an air interface rebuilding procedure to the UE. Optionally, if the MME fails in finding the UE context, the UE context resume response message cannot include MME UE S1 AP ID. Optionally, the message can carry a cause which indicates the eNB of a cause why the resume procedure fails. For this example, the carried cause can be "unknowable UE context".

### Manner 2

The MME sends a UE context resume failure message, configured to inform a base station of the failure of the UE context resume procedure, to the base station.

A description of an example is made as follows according to the manner 2 of UE context resume procedure. In the example, a "UE context resume failure message" of S 1 interface is added. When receiving the UE context resume request message sent by the eNB, and if the MME fails in finding the UE context or any of other abnormities occurs, the MME replies the UE context resume failure message to the eNB. And the message carries a "Cause" information element which indicates the eNB of a cause why the resuming fails. In the example, the carried cause can be "unknowable UE context". When receiving the message, the eNB determines that the resume procedure fails. The eNB can send a "UE context release request message" to the MME to release resources of S1 interface, or the eNB can receive a "UE context release message" later sent by the MME to release the resources of S1 interface. In addition, a eNB can trigger an air interface release or an air interface rebuilding to a UE. Alternatively, if the MME fails in finding the UE context, the UE context resume response message cannot include MME UE S1 AP ID.

### Manner 3

The MME sends a first message, not carrying an MME UE S1 AP ID message, to a base station. And the first message is configured to inform the base station of the failure of the UE context resuming.

A description of an example is made as follows to the manner 3 of a UE context resume process. In the example, when receiving the UE context resume request message sent by the eNB, and if the MME fails in finding the UE context or any of other abnormities occurs, the MME replies the UE context resume response message or the UE context resume failure message to the eNB, wherein the above-mentioned message does not include MME UE S1 AP ID. When receiving the message which does not include the MME UE S1 AP ID, the eNB determines that the resume procedure fails. The eNB can send the UE context release request message to the MME to release the resources of S 1 interface, or receive the UE context release message later sent by the MME to release the resources of S1 interface. In addition, the eNB can trigger an air interface release procedure or an air interface rebuilding procedure to the UE.

### Manner 4

The MME sends a second UE context resume response message, configured to indicate an E-UTRAN-Radio Access Bearer (E-RAB) resume failure of a UE corresponding to the UE context resume request message, to a base station, wherein the second UE context resume response message carries one or more resume-failed E-RAB IDs and/or causes of the resume failure corresponding to the resume-failed E-RAB IDs. For example, the causes of the resume failure corresponding to the resume-failed E-RAB IDs carried in the second UE context resume response message can be, but not limited to, a cause of resume failure corresponding to each resume-failed E-RAB ID; or the cause of resume failure corresponding to the resume-failed E-RAB IDs carried in the second UE context resume response message can be, but not limited to, one cause of resume failure corresponding to all the resume-failed E-RAB IDs; or the same resume failure cause corresponding to a plurality of resume-failed E-RAB IDs. And in this situation, the causes of resume failure corresponding to the resume-failed E-RAB IDs carried in the second UE context resume response message can also be, but not limited to, a plurality of different causes of resume failure.

A description of an example is made as follows according to the fourth way of a UE context resume procedure. In the example, when receiving the UE context resume request message sent by the eNB, and if the MME fails in finding the UE context or any of other abnormities occurs, the MME directly replies the UE context resume response message to the eNB, wherein the above-mentioned message indicates that all E-RABs of the UE fail in the resume procedure. When receiving the above-mentioned message indicating that all the E-RABs fail in the resume procedure, the eNB determines that the resume procedure fails. The eNB can send the "UE context release request message" to the MME to release the resources of S1 interface, or receive the "UE context release message" later sent by the MME to release the resources of S1 interface. In addition, the eNB can trigger an air interface release procedure or an air interface rebuilding procedure to the UE.

### Manner 5

The MME sends an error indication message, configured to inform a base station of an error occurring in the UE context resume procedure, to the base station.

A description of an example is made as follows according to the fifth way of a UE context resume process. In the example, when receiving the UE context resume request message sent by the eNB, and if the MME fails in finding the UE context or any of other abnormities occurs, the MME directly replies the error indication message (such as Error Indication) to the eNB, wherein the carried cause can be "unknowable UE context". When receiving the failure indication message, the eNB determines that the resume procedure fails. The eNB can send the UE context release request message to the MME to release the resources of S1 interface, or receive the UE context release message later sent by the MME to release the resources of S1 interface. In addition, the eNB can trigger an air interface release procedure or an air interface rebuilding procedure to the UE.

By the aforementioned five manners , the MME can inform a base station of the failure of the UE context resume procedure, thus the problem that the base station cannot know the failure of the UE context resume procedure can be solved and an effect that the base station can know the failure of the UE context resume procedure can be achieved. In addition, the base station can directly process an RRC connection resume request of the UE according to the notification of the failure of the UE context resume, thus the processing time of the RRC connection resume process can be shortened and the processing efficiency of the RRC connection resume process can be improved.

Alternatively, in this embodiment, when informing the base station of the failure of the UE context resuming, the MME can send a cause of the failure of the UE context resuming to the base station. For example, the MME sends a second message carrying a failure cause of the UE context resume procedure to the base station, wherein the second message is used for informing the base station of the failure of the UE context resume procedure. The value of the UE context resume failure cause is used for indicating the cause of the failure of the UE context resume procedure. By the above-mentioned steps, the MME sends the cause of the failure to the base station, and the base station can process an RRC resume request for the UE differently according to various causes, thus the processing efficiency of the resume procedure can be improved.

Alternatively, the second message can be, but not limited to, the first UE context resume response message, the UE context resume failure message, the first message which does not carry the MME UE S1 AP ID message, the second UE context resume response message or the error indication message. That is to say, all these messages (the first UE context resume response message, the UE context resume failure message, the first message which does not carry the MME UE S1 AP ID message, the second UE context resume response message or the error indication message) can directly carry a failure cause of a UE context resuming. And the second message can be a message independent from the above-mentioned messages and is dedicated for indicating the cause of failure of a UE context resume procedure.

Alternatively, in this embodiment, the failure cause of the UE context resume procedure can include ,but not limited to, one of the following causes: an unknowable UE context, a UE resource resume failure and an MME processing abnormity. By the above-mentioned steps, different causes are set for different resume failure conditions. A base station is informed of these causes, and it can obtain the condition of failure and the causes of failure of the UE context resume procedure, thus the problem that the base station cannot know the failure of the UE context resume procedure can be solved and an effect that the base station can know the failure of the UE context resume procedure can be achieved. In addition, the base station can correspondingly process resources or connections according to these causes, thus the efficiency of the UE context resume procedure can be improved and the utilization rate of the resources can also be increased.

Alternatively, after step S306, the MME can indicate the base station to release the resources of S1 interface, or indicate the base station to release the resources of S1 interface according to the UE context release request message from the base station. For example, the MME can send a UE context release command message to the base station, wherein the UE context release command message is used for indicating the base station to release the resources of S1 interface between the base station and the MME. The MME can also receive a UE context release request message sent by the base station and then send the UE context release command message to the base station according to the UE context release request message.

It can be seen that by the above-mentioned method, the MME can select a mode to process the resources of S1 interface between itself and the eNB according to the conditions of the failures of the UE context resume procedure or other conditions (such as the resource utilization condition), so that an effective management of the resources can be realized, waste of the resources can be reduced, and an effect of reasonable use of the resources can be achieved.

### A Second Embodiment

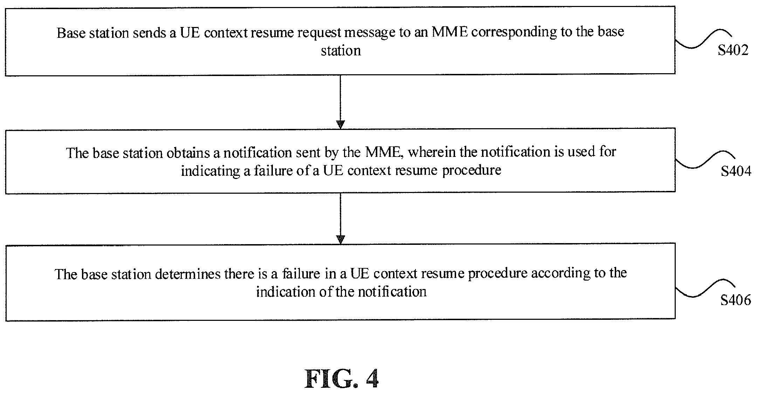

In this embodiment, a method for resuming a User Equipment (UE) context is provided. FIG. 4 is a flowchart illustrating a method for resuming a UE context according to another embodiment of the present disclosure. As shown in FIG. 4, the flow includes the following steps:
In S402, an eNB sends a UE context resume request message to an MME corresponding to the eNB, wherein the UE context resume request message is used for indicating the MME to resume the UE context corresponding to the UE context resume request message;
In S404, the eNB obtains a notification which is sent by the MME, wherein the notification is used for indicating a failure of a UE context resume procedure;
In S406, the eNB determines there is a failure in the procedure of the UE context resume according to the indication of the notification.

Alternatively, the above-mentioned steps can be applied to a resource resume scenario, more particularly to a resource resume scenario in the User Plane Mode in an NB-IOT system.

By the above-mentioned steps, under a condition that the MME fails in resuming the UE context, the eNB can directly obtain the notification, which indicates the failure of the UE context resume procedure, from the MME and execute the flow of releasing resources corresponding to the UE context according to the notification. It can be seen that by adopting the above steps, the problem that the eNB cannot know the failure of the UE context resume procedure is solved, and an effect that the eNB can know the failure of the UE context resume procedure is achieved. In addition, the eNB can directly process an RRC connection resume request from the UE according to the notification of the failure of the UE context resume, thus the processing time of the RRC connection resume procedure can be shortened and the processing efficiency of the RRC connection resume procedure can be improved.

Optionally, conditions of the failure of the UE context resume can include, but not limited to, the fact that the MME does not find the UE context requested by the eNB, or insufficient UE resources, or an MME processing abnormity, or other abnormal conditions. And there are no limitations made on the conditions in the present disclosure. In addition, the conditions of the failure of the UE context resume can correspond to identical or different failure causes of the UE context resume procedure, which serve to indicate the causes of the failure of the resume procedure. For example, the condition that the MME does not find the UE context requested by the eNB can correspond to a cause of "unknowable UE context"; the condition of insufficient UE resources can correspond to a cause of "UE resource resume failure"; the condition of the MME processing abnormity or other abnormal conditions can correspond to a cause of "MME processing abnormity".

Optionally, in step S404, the eNB can receive the notification for indicating the failure of the UE context resume procedure in one of, but not limited to, the following five manners.

### Manner 1

The eNB receives a first UE context resume response message from the MME; wherein, the first UE context resume response message is used for informing the eNB of the failure of the UE context resume procedure.

Alternatively, the eNB can receive a first UE context resume response message which carries a UE context release indication from the MME, wherein the UE context release indication is used for indicating the eNB to release the UE context.

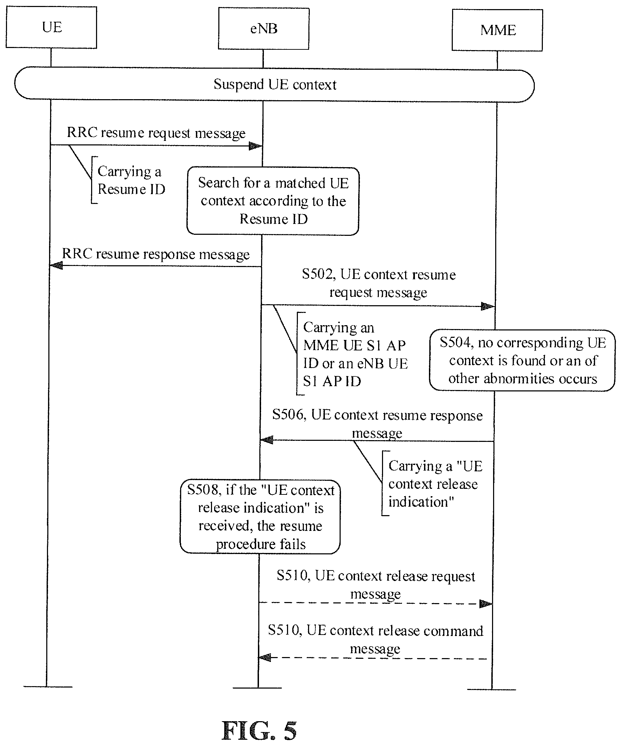

A description of an example is made as follows according to the first way of a UE context resume procedure. FIG. 5 is a flowchart illustrating a method for resuming a UE context according to a first embodiment of the present disclosure. As shown in FIG. 5, the method includes the following steps:
In S502, the eNB sends a UE context resume request message to the MME.
In S504, after receiving the message sent by the eNB, the MME searches whether a context of the UE exists in the MME according to an "MME UE S1 AP ID" and an "eNB UE S1 AP ID", and the MME fails in finding the UE context, or any of other abnormities occurs on the MME.
In S506, the MME sends a UE context resume response message to the eNB, wherein the message includes at least one of the following information elements: a "UE context release indication" information element, and a "cause" information element. If the MME does not find the UE context, the "cause" information element can of the value "unknowable UE context"; and if a bearer of the MME fails in resume, the "cause" information element can of the value "UE resource resume failure".
In S508, when receiving the UE context resume response message sent by the MME and determining that the message carries the "UE context release indication" information element, the eNB determines that the resume procedure fails.
In S510, the eNB sends a UE context release request message to the MME to release resources of S1 interface; or the eNB receives a UE context release message later sent by the MME to release the resources of S1 interface.

In addition, the eNB can trigger an air interface release procedure or an air interface rebuilding procedure to the UE.

### Manner 2

The eNB receives a UE context resume failure message which is used for informing the eNB of the failure of the UE context resume procedure from the MME.

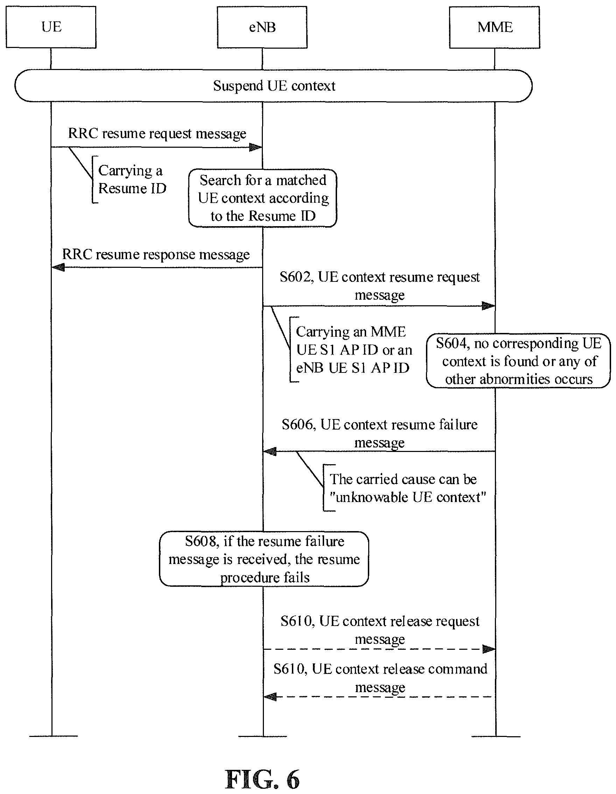

A description of an example is made as follows according to the second way of a UE context resume procedure. FIG. 6 is a flowchart illustrating a method for resuming a UE context according to a second embodiment of the present disclosure. As shown in FIG. 6, the method includes the following steps:
In S602, the eNB sends a UE context resume request message to the MME.
In S604, after receiving the message sent by the eNB, the MME searches whether a context of the UE exists in the MME according to an "MME UE S1 AP ID" and an "eNB UE S1 AP ID", and the MME fails in finding the UE context, or any of other abnormities occurs on the MME.
In S606, the MME sends the UE context resume failure message to the eNB, wherein the message carries a "cause" information element. If the MME does not find the UE context, the information element can be of the value "unknowable UE context"; and if a bearer of the MME fails in the resume procedure, the information element can be of the value "UE resource resume failure".
In S608, when receiving the UE context resume failure message sent by the MME, the eNB determines that the resume procedure fails.
In S610, the eNB sends a UE context release request message to the MME to release resources of S1 interface; or the eNB receives a UE context release message later sent by the MME to release the resources of S1 interface.

In addition, the eNB can trigger an air interface release procedure or an air interface rebuilding procedure to the UE.

### Manner 3

The eNB receives a first message which is sent by the MME. The first message does not carry an MME UE S1 AP ID message and is used for informing the eNB of the failure of the UE context resume procedure.

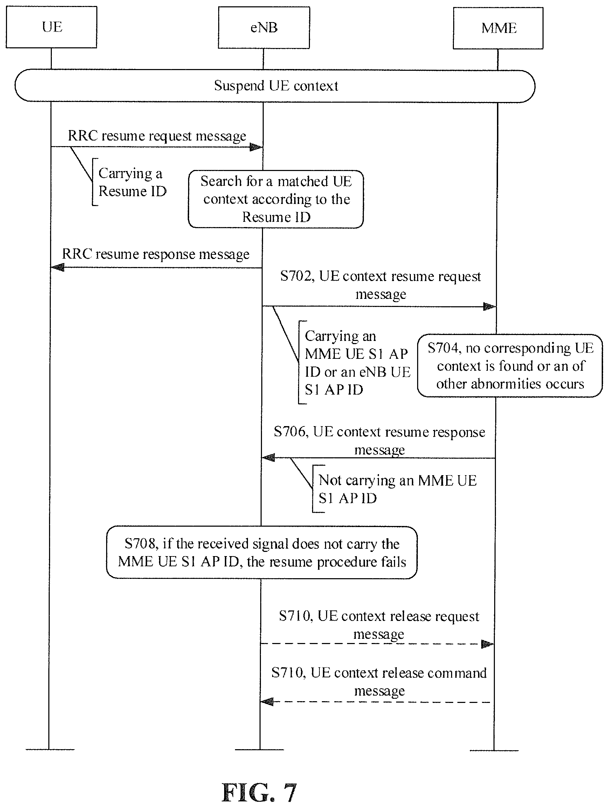

A description of an example is made as follows according to the third way of a UE context resume procedure. FIG. 7 is a flowchart illustrating a method for resuming a UE context according to a third embodiment of the present disclosure. As shown in FIG. 7, the method includes the following steps:
In S702, the eNB sends a UE context resume request message to the MME.
In S704, after receiving the message sent by the eNB, the MME searches whether a context of the UE exists in the MME according to an "MME UE S1 AP ID" and an "eNB UE S1 AP ID", and the MME fails in finding the UE context, or any other abnormities occurs on the MME.
In S706, the MME sends the UE context resume response message to the eNB, wherein the message can be one of the following messages: a message which does not carry the MME UE S1 AP ID and a message carrying a "cause" information element. If the MME does not find the UE context, the "cause" information element can be of the value "unknowable UE context"; if a bearer of the MME side fails in resume, the "cause" information element can be of the value "UE resource resume failure".
In S708, when receiving the UE context resume response message sent by the MME and determining that the message does not carry the MME UE S1 AP ID, the eNB determines that the resume procedure fails.
In S710, the eNB sends a UE context release request message to the MME to release resources of S1 interface; or the eNB receives a UE context release message later sent by the MME to release the resources of S1 interface.

In addition, the eNB can trigger an air interface release procedure or an air interface rebuilding procedure to the UE.

### Manner 4

The eNB receives a second UE context resume response message sent by the MME, wherein the second UE context resume response message is used for indicating an E-RAB resume failure of UE corresponding to the UE context resume request message, and the second UE context resume response message carries one or multiple resume-failed E-RAB IDs and/or resume failure causes corresponding to the resume-failed E-RAB IDs. For example, the resume failure causes corresponding to the resume-failed E-RAB IDs carried in the second UE context resume response message can be, but not limited to, a resume failure cause corresponding to each resume-failed E-RAB ID; or the resume failure causes corresponding to the resume-failed E-RAB IDs carried in the second UE context resume response message can be, but not limited to, one resume failure cause corresponding to all the resume-failed E-RAB IDs; or the same resume failure cause corresponding to multiple resume-failed E-RAB IDs. And under such condition, the resume failure causes corresponding to the resume-failed E-RAB IDs carried in the second UE context resume response message can be, but not limited to, multiple different resume failure causes.

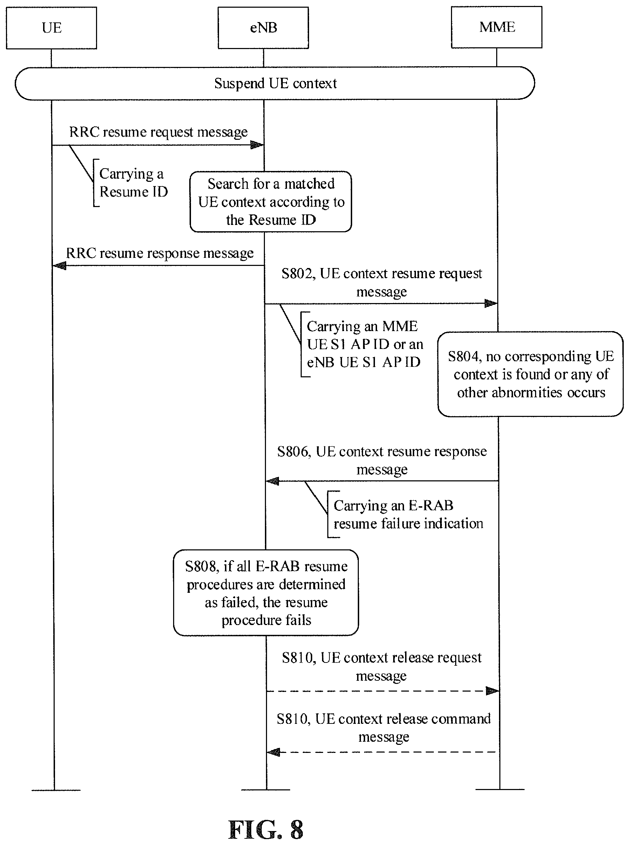

A description of an example is made as follows according to the fourth way of a UE context resume procedure. FIG. 8 is a flowchart illustrating a method for resuming a UE context according to a fifth embodiment of the present disclosure. As shown in FIG. 8, the method includes the following steps:
In S802, the eNB sends a UE context resume request message to the MME.
In S804, after receiving the message sent by the eNB, the MME searches whether a context of the UE exists in the MME according to an "MME UE S1 AP ID" and an "eNB UE S1 AP ID", and the MME fails in finding the UE context, or any of other abnormities occurs on the MME (for example, bearers cannot be resumed due to limitations to resources on the MME).
In S806, the MME sends the UE context resume response message to the eNB, wherein the message can include at least one of the following messages: a message carrying all the resume-failed E-RAB IDs and a message carrying a "cause" information element. If the MME does not find the UE context, the "cause" information element can be filled as "unknowable UE context"; and if the bearers cannot be resumed due to the limitations to the resources on the MME, the "cause" information element can be filled as "MME resource limitation".
In S808, when receiving the UE context resume response message sent by the MME and determining that the message carries all the resume-failed E-RAB IDs, the eNB determines that the resume procedure fails.
In S810, the eNB sends a UE context release request message to the MME to release resources of S1 interface; or the eNB receives a UE context release message later sent by the MME to release the resources of S 1 interface.

In addition, the eNB can trigger an air interface release procedure or an air interface rebuilding procedure to the UE.

### Manner 5

The eNB receives an error indication message which is sent by the MME. The error indication message is used for indicating an error occurring in the UE context resume procedure.

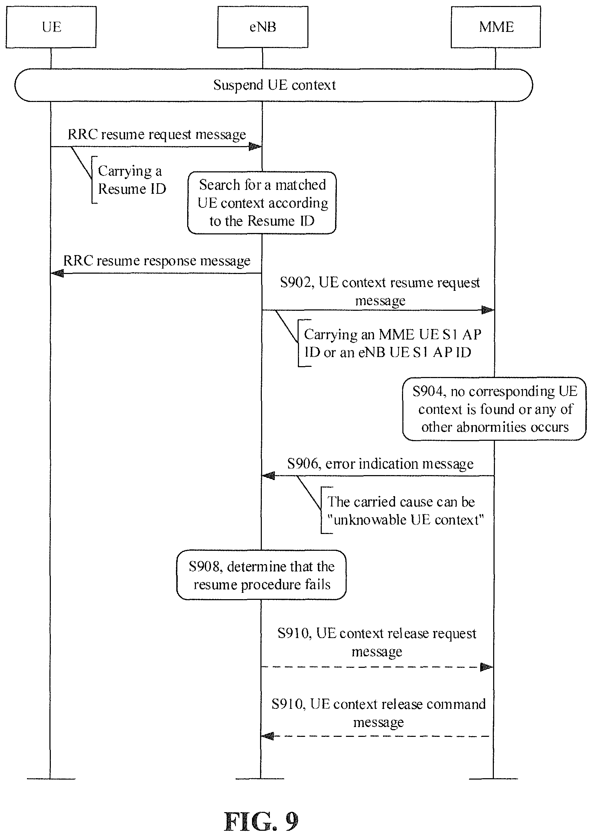

A description of an example is made as follows according to the fifth way of a UE context resume procedure. FIG. 9 is a flowchart of a method for resuming a UE context according to the fifth embodiment of the present disclosure. As shown in FIG. 9, the method includes the following steps:
In S902, the eNB sends a UE context resume request message to the MME.
In S904, after receiving the message sent by the eNB, the MME searches whether a context of the UE exists in the MME according to an "MME UE S1 AP ID" and an "eNB UE S1 AP ID", and the MME fails in finding the UE context, or any of other abnormities occurs on the MME.
In S906, the MME sends an error indication message to the eNB, wherein the message can include the following contexts: a "cause" information element. If the MME does not find the UE context, the information element can be filled as the "unknowable UE context".
In S908, when receiving the error indication message sent by the MME, the eNB determines that the resume procedure fails.
In S910, the eNB sends a UE context release request message to the MME to release resources of S1 interface; or the eNB receives a UE context release message later sent by the MME to release the resources of S 1 interface.

In addition, the eNB can trigger an air interface release or an air interface rebuilding to the UE.

By above 5 manners, the eNB can decide to process an RRC connection resume request of the UE according to different notifications for indicating the failure of the UE context resume procedure. It can be seen that by the above-mentioned steps, the problem that the eNB cannot know the failure of the UE context resume procedure is solved, and an effect that the eNB can know the failure of the UE context resume procedure is achieved. In addition, the eNB can directly process the RRC connection resume request of the UE according to the notification of the UE context resume failure, thus the processing time of RRC connection resume procedure is shortened and the processing efficiency of the RRC connection resume procedure is improved.

Alternatively, in step S404, the notification received by the eNB receives possibly carries a cause of the failure of the UE context resume procedure. For example, the eNB receives a second message carrying a failure cause of the UE context resume procedure sent by the MME, wherein the second message is used for informing the eNB of the failure of the UE context resume procedure; and the failure cause of the UE context resume procedure is used for indicating the cause of the failure of the UE context resume procedure.

Alternatively, the second message can be, but not limited to, the first UE context resume response message, the UE context resume failure message, the first message which does not carry the MME UE S1 AP ID message, the second UE context resume response message and the error indication message. That is to say, all these messages can directly carry the failure cause of the UE context resume procedure. Also the second message can be a message independent from the above-mentioned messages and is specially used for indicating the cause of the failure of the UE context resume procedure.

Alternatively, the failure causes of the UE context resume procedure can include but not limited to one of the following causes: an unknowable UE context, a UE resource resume failure and an MME processing abnormity. By the above-mentioned steps, different causes are set for different conditions of the failure of the resume procedure. The eNB is informed of these causes, and it can obtain the failure of the UE context resume procedure and the cause of the failure, thus the problem that the eNB cannot know the failure of the UE context resume procedure can be solved and an effect that the eNB can know the failure of the UE context resume procedure can be obtained. In addition, the eNB can correspondingly process resources or connections according to these causes, thus the UE context resume efficiency can be improved and the utilization rate of the resources can also be increased.

Alternatively, after step S406, a base station can inform a UE corresponding to the UE context resume request message of releasing an air interface or rebuilding the air interface. It can be seen that after a MME informs a base station of a failure of a UE context resume procedure, the base station determines a processing strategy for the UE, and it can release air interface resources of the UE and can also rebuild connection with the UE. By the above-mentioned steps, the base station can determine the strategy executed for the UE according to the obtained UE context resume failure, thus the problem that the base station cannot know the failure of a UE context resuming can be solved and the effect that the eNB can know the failure of the UE context resuming can be achieved. Meanwhile, the efficiency of the resume flow can be also improved. In addition, timely taking of a corresponding measure at UE side also avoids waste of the resources and increases the utilization rate of the resources.

After the base station determines the UE context resume failure, the resources of S1 interface between the base station and the MME can be scheduled.

For example, after the above-mentioned step S406, the eNB receives a UE context release command message sent by the MME and releases the resources of S1 interface between the eNB and the MME according to the indication of the UE context release command message.

In addition, before receiving the UE context release command message sent by the MME, the eNB can further send a UE context release request message to the MME. Then after receiving the UE context release command message sent by the MME, the eNB releases the sources of S1 interface between the eNB and the MME according to the indication of the MME.

It can be seen that by the above-mentioned steps, after knowing the failure of the UE context resume procedure, the eNB can process resources of interfaces S1 among other MMEs as required, so that the problem that the eNB cannot know the failure of the UE context resume procedure is solved, the effect that the eNB can know the failure of the UE context resume procedure is achieved, the resources can be scheduled more reasonably, and the utilization rate of the resources is increased.

By the descriptions of the above implementations, the person skilled in the art can clearly leam that the methods provided by the above-mentioned embodiments can be implemented via software and a necessary general hardware platform, and of course, the methods can be also implemented via hardware, but under many circumstances, the former is better. Based on such understanding, the technical scheme of the present disclosure can be essentially embodied or portions making contributions to the prior art can be embodied in the form of a software product. The computer software product is stored in a storage medium (such as a Read-Only Memory (ROM)/Random Access Memory (RAM), a magnetic disk and an optical disk), and includes a plurality of instructions, configured to enable one set of terminal equipment (which can be a mobile phone, a computer, a server, network equipment and the like) to execute the methods provided by all the embodiments of the present disclosure.

### A Third Embodiment

In this embodiment, a device for resuming a UE context is provided, which is applied to a Mobility Management Entity (MME) and is used for implementing the above-mentioned embodiments and the preferable implementations. Those embodiments stated will not be described again. The term "Module" used as follows can be implemented by a combination of software and/or hardware with preset functions. Although the devices described in the following embodiments are implemented more preferably via software, it is possible and conceivable that the devices can be implemented via hardware, or the combination of software and hardware.

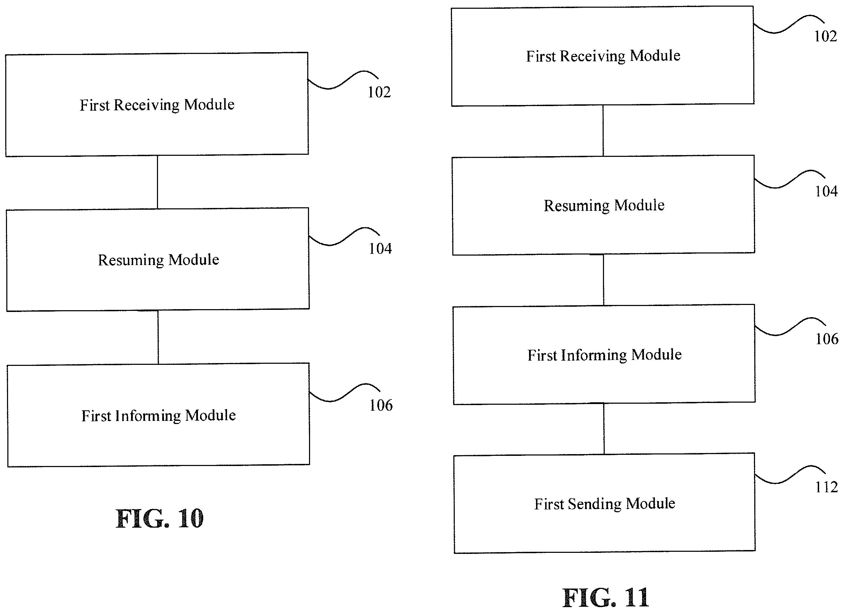

FIG. 10 is a schematic diagram illustrating the structure of a device for resuming a UE context according to an embodiment of the present disclosure. As shown in FIG. 10, the device can include:
(1) a first receiving module 102, configured to receive a UE context resume request message sent by an eNB;
(2) a resuming module 104, coupled to the first receiving module 102 and configured to resume the UE context corresponding to the UE context resume request message;
(3) a first informing module 106, coupled to the resuming module 104 and configured to inform the eNB of the failure of a UE context resume procedure under a condition that the UE context resume procedure fails.

Alternatively, the first informing module 106 is configured to send a first UE context resume response message to the eNB, wherein the first UE context resume response message is used for informing the eNB of the failure of the UE context resume procedure; or send a UE context resume failure message to the eNB, wherein the UE context resume failure message is used for informing the eNB of the failure of the UE context resume procedure; or send a first message, which does not carry an MME UE S1 AP ID message, to the eNB, wherein the first message is used for informing the eNB of the failure of the UE context resume procedure; or send a second UE context resume response message to the eNB, wherein the second UE context resume response message is used for indicating a failure of an E-RAB resume procedure of UE corresponding to the UE context resume request message, and the second UE context resume response message carries one or multiple resume-failed E-RAB IDs and/or resume failure causes corresponding to the resume-failed E-RAB IDs; or send an error indication message to the eNB, wherein the error indication message is used for informing the eNB of an error occurring in the UE context resume procedure.

Alternatively, the first informing module 106 is configured to send the first UE context resume response message carrying a UE context release indication to the eNB, wherein the UE context release indication is used for indicating the eNB to release the UE context.

Alternatively, the first informing module 106 is configured to send a second message carrying a failure cause of a UE context resume procedure to the eNB, wherein the second message is used for informing the failure of the eNB of the UE context resume procedure, and the failure cause of the UE context resume procedure is used for indicating a cause of the failure of the UE context resume procedure.

Optionally, the UE context resume failure cause can include, but not limited to, one of the following causes: an unknowable UE context, a UE resource resume failure and an MME processing abnormity.

FIG. 11 is a schematic diagram illustrating the structure of a device for resuming a UE context according to another embodiment of the present disclosure. As shown in FIG. 11, Optionally, the device can further include:
a first sending module 112, coupled to the first informing module 106 and configured to send a UE context release command message to the eNB, wherein the UE context release command message is used for indicating the eNB to release resources of S1 interface between the eNB and the MME.

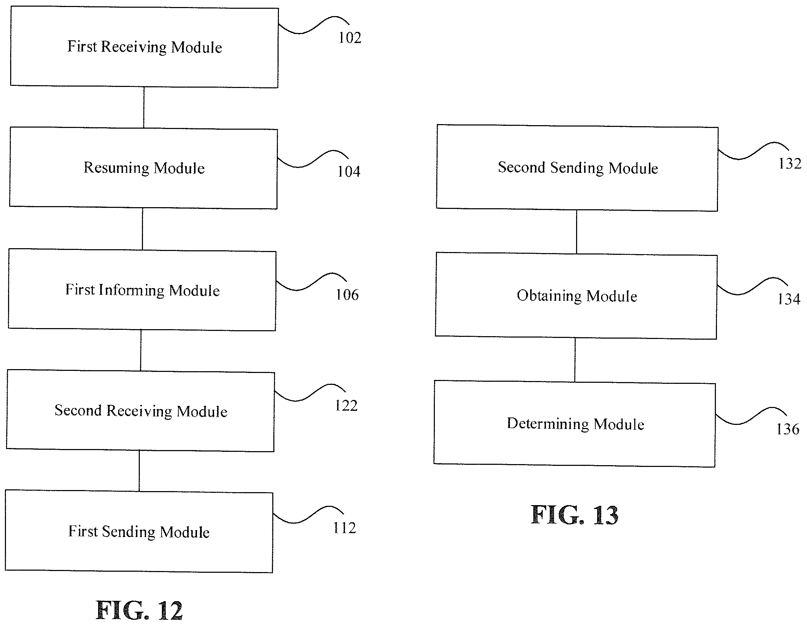

FIG. 12 is a schematic diagram illustrating the structure of a device for resuming a UE context according to still another embodiment of the present disclosure. As shown in FIG. 12, Optionally, the device can further include:
a second receiving module 122, coupled between the first informing module 106 and the first sending module 112 and configured to receive a UE context release request message sent by the eNB.

### A Fourth Embodiment

In this embodiment, a device for resuming a UE context is provided, which is applied to an eNB and is used for implementing the above-mentioned embodiments and the preferable implementations. Those embodiments stated will not be described again. The term "Module" used as follows can be implemented by a combination of software and/or hardware with preset functions. Although the devices described in the following embodiments are implemented more Optionally via software, it is possible and conceivable that the devices can be implemented via hardware, or the combination of software and hardware.

FIG. 13 is a schematic diagram illustrating the structure of a device for resuming a UE context according to yet another embodiment of the present disclosure. As shown in FIG. 13, the device can include:
1) a second sending module 132, configured to send a UE context resume request message to an MME corresponding to the eNB, wherein the UE context resume request message is used for indicating the MME to resume the UE context corresponding to the UE context resume request message;
2) an obtaining module 134, coupled to the second sending module 132 and configured to obtain a notification which is sent by the MME, wherein the notification is used for indicating a failure of a UE context resume procedure;
3) a determining module 136, coupled to the obtaining module 134 and configured to determine there is a failure in the UE context resume procedure according to the indication of the notification.

Alternatively, the obtaining module 134 is configured to receive a first UE context resume response message sent by the MME, wherein the first UE context resume response message is used for informing the eNB of the failure of the UE context resume procedure; or receive a UE context resume failure message sent by the MME, wherein the UE context resume failure message is used for informing the eNB of the failure of the UE context resume procedure; or receive a first message which does not carry an MME UE S1 AP ID message from the MME, wherein the first message is used for informing the eNB of the failure of the UE context resume procedure; or receive a second UE context resume response message sent by the MME, wherein the second UE context resume response message is used for indicating a failure in an E-RAB resume procedure of UE corresponding to the UE context resume request message, and the second UE context resume response message carries one or multiple resume-failed E-RAB IDs and/or resume failure causes corresponding to the resume-failed E-RAB IDs; or receive an error indication message sent by the MME, wherein the error indication message is used for informing the eNB of an error occurring in the UE context resume procedure.

Alternatively, the obtaining module 134 is configured to receive the first UE context resume response message sent by the MME, wherein the first context resume response message carries a UE context release indication, wherein the UE context release indication is used for indicating the eNB to release the UE context.

Alternatively, the obtaining module 134 is configured to receive a second message which is sent by the MME, wherein the second message carries a failure cause of the UE context resume procedure, and is used for informing the eNB of the failure of the UE context resume procedure, wherein the failure cause of the UE context resume is used for indicating a cause of the failure of the UE context resume procedure.

Alternatively, the failure causes of the UE context resume procedure can include, but not limited to, one of the following causes: an unknowable UE context, a UE resource resume failure and an MME processing abnormity.

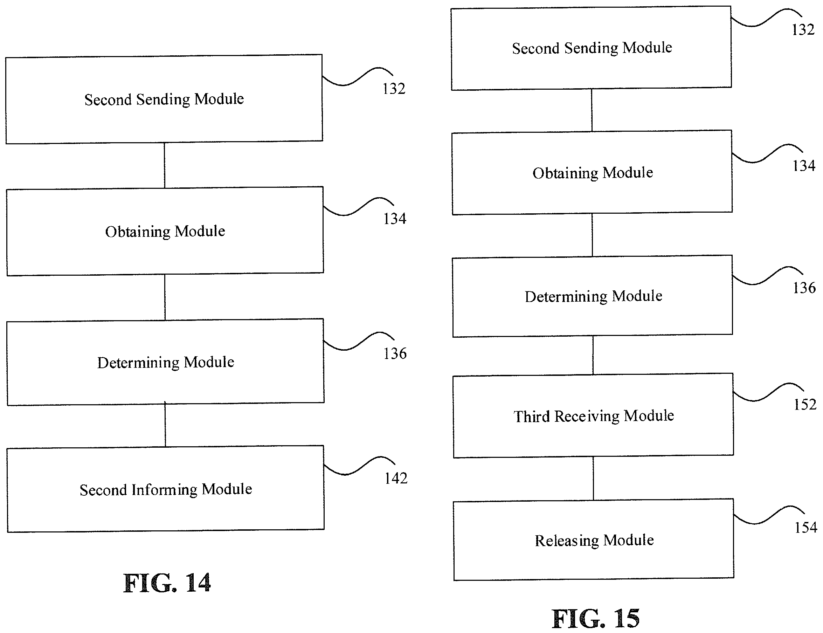

FIG. 14 is a schematic diagram illustrating the structure of a device for resuming a UE context according to yet another embodiment of the present disclosure. As shown in FIG. 14, Optionally, the device can further include:
a second informing module 142, coupled to the determining module 136 and configured to inform the UE corresponding to the UE context resume request message to release an air interface or to rebuild the air interface.

FIG. 15 is a schematic diagram illustrating the structure of a device for resuming a UE context according to yet another embodiment of the present disclosure. As shown in FIG. 15, Optionally, the device can further include:
1) a third receiving module 152, coupled to the determining module 136 and configured to receive a UE context release command message sent by the MME under a condition that the notification includes the first message or the second UE context resume response message or the error indication message;
2) a releasing module 154, coupled to the third receiving module 152 and configured to release resources of S1 interface between the eNB and the MME according to the indication of the UE context release command message.

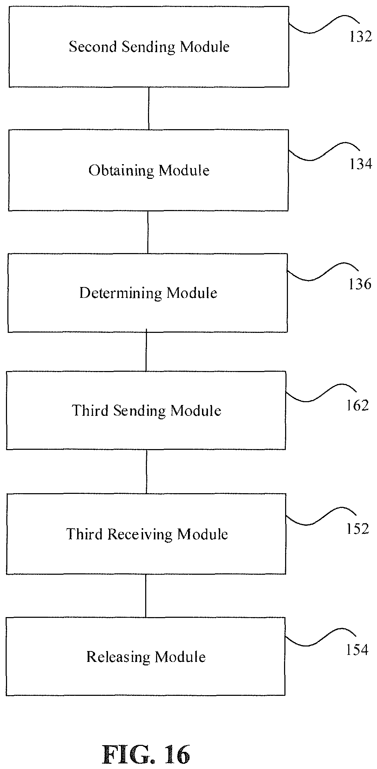

FIG. 16 is a schematic diagram illustrating the structure of a device for resuming a UE context according to yet another embodiment of the present disclosure. As shown in FIG. 16, Optionally, the device can further include:
a third sending module 162, coupled between the third receiving module 152 and the determining module 136 and configured to send a UE context release request message to the MME.

### A Fifth Embodiment

In this embodiment, a system for resuming a UE context is provided, including the above-mentioned device, applied to an MME, for resuming the UE context, and the above-mentioned device, applied to an eNB, for resuming the UE context.

It should be noted that all the above-mentioned modules can be implemented via software or hardware. The hardware can be implemented via, but not limited to, the following modes: all these modules are located in the same processor or respectively located in multiple processors.

### A Sixth Embodiment

The embodiment of the present disclosure further provides software. The software is used for executing the technical schemes described in the above-mentioned embodiments and preferable implementations.

The embodiment of the present disclosure further provides a storage medium. In this embodiment, the storage medium can be configured to store program codes for executing the following steps:
In S11, an MME receives a UE context resume request message sent by an eNB;
In S12, the MME resumes the UE context corresponding to the UE context resume request message;
In S13, under a condition that UE context resume procedure fails, the MME informs the eNB of the failure of the UE context resume procedure.

Alternatively, the storage medium is further configured to store program codes for executing the following steps:
In S21, the eNB sends a UE context resume request message to the MME corresponding to the eNB, wherein the UE context resume request message is used for indicating the MME to resume the UE context corresponding to the UE context resume request message;
In S22, the eNB obtains a notification sent by the MME, wherein the notification is used for indicating the failure of the UE context resume procedure;
In S23, the eNB determines there is a failure in the UE context resume procedure according to the indication of the notification.

Alternatively, in this embodiment, the storage medium can include, but not limited to various mediums capable of storing the program codes, such as a USB flash disk, a Read-Only Memory (ROM), a Random Access Memory (RAM), a mobile hard disk drive, a magnetic disk and an optical disk.

In conclusion, compared with the prior arts, any one of the above-mentioned embodiments of the present disclosure perfects the processing flow in a Resume procedure in case that an abnormity occurs in a core network. And the Resume procedure proposed can save signaling on S1 interface and avoid waste of transmission resources and accelerate releasing of resources under abnormal conditions.

It is clear that those skilled in the art should understand that the respective modules or steps of the present disclosure can be realized through a general computing device, and they could be concentrated on a single computing device or distributed on a network consisting of multiple computing devices. Optionally, the modules or steps could be realized through program codes executable for the computing device, so that they could be stored in a storage device and executed by the computing device. Moreover, under certain circumstances, the steps embodied or described could be executed according to a sequence different from one herein, or they are realized after being respectively manufactured into respective integrated circuit modules or multiple modules or steps therein are manufactured into a single integrated circuit module for implementation. Therefore, no limitations would be put on any specific hardware and software combinations in the present disclosure.

The above-mentioned embodiments of the present disclosure are not intended to limit the present disclosure. As will occur to a person skilled in the art, the present disclosure is susceptible to various modifications and changes. Any modifications, equivalent replacements, improvements and the like made within the spirit and principle of the present disclosure shall fall within the scope of protection of the present disclosure.

### Industrial Applicability

According to the embodiment of the present disclosure, by adopting a mode that the MME can receive the UE context resume request message sent by the eNB, resume the UE context corresponding to the UE context resume request message, and under the condition that the UE context resume procedure fails, inform the eNB of the failure of the UE context resume procedure. When failing in resuming the UE context according to the indication of the eNB, the MME can directly inform the eNB of the UE context resume failure message, thus the problem that the eNB cannot know the failure of the UE context resume procedure can be solved and an effect that the eNB can know the failure of the UE context resume procedure can be achieved. In addition, the eNB can directly process an RRC connection resume request of the UE according to the notification of the failure of the UE context resume procedure, thus the processing time of the RRC connection resume procedure is shortened and the processing efficiency of the RRC connection resume procedure is improved.

## Claims

1. A method for resuming a User Equipment (UE) context, comprising:
receiving, by a Mobility Management Entity (MME), a UE context resume request message sent by a base station;
resuming, by the MME, the UE context corresponding to the UE context resume request message;
informing, by the MME, the base station of the failure of the UE context resume procedure under a condition that the UE context resume procedure fails.

2. The method of claim 1, wherein the step of informing, by the MME, the base station of the failure of the UE context resume procedure comprises:
sending, by the MME, a first UE context resume response message to the base station, wherein the first UE context resume response message is used for informing the base station of the failure of the UE context resume procedure; or
sending, by the MME, a UE context resume failure message to the base station, wherein the UE context resume failure message is used for informing the base station of the failure the UE context resume procedure; or
sending, by the MME, a first message, which does not carry an MME UE S1 AP ID message, to the base station, wherein the first message is used for informing the base station of the failure of the UE context resume procedure; or
sending, by the MME, a second UE context resume response message to the base station, wherein the second UE context resume response message is used for indicating a failure of an Evolved-Radio Access Bearer (E-RAB) resume procedure of UE corresponding to the UE context resume request message, and the second UE context resume response message carries one or multiple resume-failed E-RAB IDs and/or resume failure causes corresponding to the resume-failed E-RAB IDs; or
sending, by the MME, an error indication message to the base station, wherein the error indication message is used for informing the base station of an error occurring in the UE context resume procedure.

3. The method of claim 2, wherein the step of sending, by the MME, the first UE context resume response message to the base station comprises:
sending, by the MME, the first UE context resume response message carrying a UE context release indication to the base station, wherein the UE context release indication is used for indicating the base station to release the UE context.

4. The method of any one of claims 1-3, wherein the step of informing, by the MME, the base station of the failure of the UE context resume procedure comprises:
sending, by the MME, a second message carrying a failure cause of the UE context resume procedure to the base station, wherein the second message is used for informing the base station of the failure of the UE context resume procedure, and the failure cause of the UE context resume procedure is used for indicating a reason of the failure of the UE context resume procedure.

5. The method of claim 4, wherein the failure cause of the UE context resume procedure comprises one of an unknowable UE context, a UE resource resume failure and an MME processing abnormity.

6. The method of claim 1, further comprising:
sending, by the MME, a UE context release command message to the base station after informing the base station of the failure of the UE context resume procedure, wherein the UE context release command message is used for indicating the base station to release resources of interface S1 between the base station and the MME.

7. The method of claim 6, further comprising:
receiving, by the MME, a UE context release request message sent by the base station, before sending the UE context release command message to the base station.

8. A method for resuming a User Equipment (UE) context, comprises:
sending, by a base station, a UE context resume request message to a Mobility Management Entity (MME) corresponding to the base station, wherein the UE context resume request message is used for indicating the MME to resume the UE context corresponding to the UE context resume request message;
obtaining, by the base station, a notification sent by the MME, wherein the notification is used for indicating a failure of a UE context resume procedure;
determining, by the base station, there is a failure in the UE context resume procedure according to the indication of the notification.

9. The method of claim 8, wherein the step of obtaining, by the base station, the notification sent by the MME comprises:
receiving, by the base station, a first UE context resume response message sent by the MME, wherein the first UE context resume response message is used for informing the base station of the failure of the UE context resume procedure; or
receiving, by the base station, a UE context resume failure message sent by the MME, wherein the UE context resume failure message is used for informing the base station of the failure of the UE context resume procedure; or
receiving, by the base station, a first message, which does not carry an MME UE S1 AP ID message, sent by the MME, wherein the first message is used for informing the base station of the failure of the UE context resume procedure; or
receiving, by the base station, a second UE context resume response message sent by the MME, wherein the second UE context resume response message is used for indicating a failure of an Evolved-Radio Access Bearer (E-RAB) resume procedure of the UE corresponding to the UE context resume request message, and the second UE context resume response message carries one or multiple resume-failed E-RAB IDs and/or resume failure causes corresponding to the resume-failed E-RAB IDs; or
receiving, by the base station, an error indication message sent by the MME, wherein the error indication message is used for informing the base station of an error occurring in the UE context resume procedure.

10. The method of claim 9, wherein the step of receiving, by the base station, the first UE context resume response message sent by the MME comprises:
receiving, by the base station, the first UE context resume response message sent by the MME, wherein the first UE context resume response message carries a UE context release indication, wherein the UE context release indication is used for indicating the base station to release the UE context.

11. The method of any one of claims 8-10, wherein the step of obtaining, by the base station, the notification sent by the MME comprises:
receiving, by the base station, a second message sent by the MME, wherein the second message carries a failure cause of the UE context resume procedure and is used for informing the base station of the failure of the UE context resume procedure, and wherein the failure cause of the UE context resume procedure is used for indicating a reason of the failure of the UE context resume procedure.

12. The method of claim 11, wherein the failure cause of the UE context resume procedure comprises one of an unknowable UE context, a UE resource resume failure and an MME processing abnormity.

13. The method of any one of claims 8-10, further comprising:
informing, by the base station, the UE corresponding to the UE context resume request message to release an air interface or to rebuild the air interface after determining there is a failure in the UE context resume procedure according to the indication of the notification.

14. The method of any one of claims 8-10, further comprising:
receiving, by the base station, a UE context release command message sent by the MME, after determining there is a failure of the UE context resume procedure according to the indication of the notification; and
releasing, by the base station, resources of interface S1 between the base station and the MME according to the indication of the UE context release command message.

15. The method of claim 14, further comprising:
sending, by the base station, a UE context release request message to the MME, before receiving the UE context release command message sent by the MME.

16. A device for resuming a User Equipment (UE) context applied to a Mobility Management Entity (MME), comprising:
a first receiving module, configured to receive a UE context resume request message sent by a base station;
a resuming module, configured to resume the UE context corresponding to the UE context resume request message;
a first informing module, configured to inform the base station of a failure of a UE context resume procedure under a condition that the UE context resume procedure fails.

17. The device of claim 16, wherein the first informing module is configured to:
send a first UE context resume response message to the base station, wherein the first UE context resume response message is used for informing the base station of the failure of the UE context resume procedure; or
send a UE context resume failure message to the base station, wherein the UE context resume failure message is used for informing the base station of the failure of the UE context resume procedure; or
send a first message, which does not carry an MME UE S1 AP ID message, to the base station, wherein the first message is used for informing the base station of the failure of the UE context resume procedure; or
send a second UE context resume response message to the base station, wherein the second UE context resume response message is used for indicating a failure of an Evolved-Radio Access Bearer (E-RAB) resume procedure of the UE corresponding to the UE context resume request message, and the second UE context resume response message carries one or multiple resume-failed E-RAB IDs and/or resume failure causes corresponding to the resume-failed E-RAB IDs; or
send an error indication message to the base station, wherein the error indication message is used for informing the base station of an error occurring in the UE context resume procedure.

18. The device of claim 17, wherein the first informing module is configured to send the first UE context resume response message carrying a UE context release indication to the base station, wherein the UE context release indication is used for indicating the base station to release the UE context.

19. The device of any one of claims 16-18, wherein the first informing module is configured to send a second message carrying a failure cause of the UE context resume procedure to the base station, wherein the second message is used for informing the base station of the failure of the UE context resume procedure, and the failure cause of the UE context resume procedure is used for indicating a reason of the failure of the UE context resume procedure.

20. The device of claim 19, wherein the failure cause of the UE context resume procedure includes one of an unknowable UE context, a UE resource resume failure and an MME processing abnormity.

21. The device of claim 16, further comprising:
a first sending module, configured to send a UE context release command message to the base station, wherein the UE context release command message is used for indicating the base station to release resources of interface S1 between the base station and the MME.

22. The device of claim 21, further comprising:
a second receiving module, configured to receive a UE context release request message sent by the base station.

23. A device for resuming a User Equipment (UE) context applied to a base station, comprising:
a second sending module, configured to send a UE context resume request message to a Mobility Management Entity (MME) corresponding to the base station, wherein the UE context resume request message is used for indicating the MME to resume the UE context corresponding to the UE context resume request message;
an obtaining module, configured to obtain a notification sent by the MME, wherein the notification is used for indicating a failure of a UE context resume procedure;
a determining module, configured to determine there is a failure in the UE context resume procedure according to the indication of the notification.

24. The device of claim 23, wherein the obtaining module is configured to:
receive a first UE context resume response message sent by the MME, wherein the first UE context resume response message is used for informing the base station of the failure of the UE context resume procedure; or
receive a UE context resume failure message sent by the MME, wherein the UE context resume failure message is used for informing the base station of the failure of the UE context resume procedure; or
receive a first message which does not carry an MME UE S1 AP ID message from the MME, wherein the first message is used for informing the base station of the failure of the UE context resume procedure; or
receive a second UE context resume response message sent by the MME, wherein the second UE context resume response message is used for indicating a failure in an Evolved-Radio Access Bearer (E-RAB) resume procedure of the UE corresponding to the UE context resume request message, and the second UE context resume response message carries one or multiple resume-failed E-RAB IDs and/or resume failure causes corresponding to the resume-failed E-RAB IDs; or
receive an error indication message sent by the MME, wherein the error indication message is used for informing the base station of an error occurring in the UE context resume procedure.

25. The device of claim, 24, wherein the obtaining module is configured to receive the first UE context resume response message which is sent by the MME and carries a UE context release indication, wherein the UE context release indication is used for indicating the base station to release the UE context.

26. The device of any one of claims 23-25, wherein the obtaining module is configured to receive a second message which is sent by the MME and carries a failure cause of the UE context resume procedure, wherein the second message is used for informing the base station of the failure of the UE context resume procedure, and the failure cause of the UE context resume procedure is used for indicating a reason of the failure of the UE context resume procedure.

27. The device of claim 26, wherein the failure cause of the UE context resume procedure includes one of an unknowable UE context, a UE resource resume failure and an MME processing abnormity.

28. The device of any one of claims 23-25, further comprising:
a second informing module, configured to inform the UE corresponding to the UE context resume request message to release an air interface or to rebuild the air interface.

29. The device of any one of claims 23-25, further comprising:
a third receiving module, configured to receive a UE context release command message sent by the MME; and
a releasing module, configured to release resources of interface S1 between the base station and the MME according to the indication of the UE context release command message.

30. The device of claim 29, further comprising:
a third sending module, configured to send a UE context release request message to the MME.

31. A system for resuming a User Equipment (UE) context, comprising:
a device for resuming the UE context according to any one of claims 16 to 22; and
a device for resuming the UE context according to any one of claims 23 to 30.
